# EUROPEAN PATENT SPECIFICATION

(11) **EP 4 662 091 B1**
(45) Date of publication and mention of the grant of the patent: **17.06.2026**
(21) Application number: 24703756.7
(22) Date of filing: 06.02.2024
(51) Int. Cl.: B60R 19/34

(54) **COMPOSITE CRUSH CAN**
ZUSAMMENGESETZTE QUETSCHDOSE
BOÎTE D'ÉCRASEMENT COMPOSITE

(30) Priority: 06.02.2023 GB 202301631
(43) Date of publication of application: 17.12.2025
(73) Proprietor: Jaguar Land Rover Limited, Coventry, Warwickshire CV3 4LF (GB)
(72) Inventor: SMITH, James, Coventry Warwickshire CV3 4LF (GB); SICARD, Frederic, Coventry Warwickshire CV3 4LF (GB); GUNTRIP HOOK, Nicholas, Coventry Warwickshire CV3 4LF (GB); MILLERA GRAU, David, Coventry Warwickshire CV3 4LF (GB); KERR, Tom, Coventry Warwickshire CV3 4LF (GB); LAKIC, Alex, Coventry Warwickshire CV3 4LF (GB)
(74) Representative: Jaguar Land Rover Patents Department
(86) International application number: PCT/EP2024/052849
(87) International publication number: WO 2024/165530

(56) References cited:
- JP-A- 2013 159 132
- JP-A- 2021 109 506
- US-A1- 2019 202 387
- US-A1- 2020 324 823
- US-A1- 2022 266 784

## Description

### TECHNICAL FIELD

The present disclosure relates to a composite crush can. Aspects of the invention relate to a composite crush can for a vehicle, an energy absorption system for a vehicle, comprising a composite crush can and a vehicle comprising a composite crush can according to embodiments of the invention.

### BACKGROUND

It is known to provide energy absorption systems for vehicles to absorb energy arising from a crash event. Such energy absorption systems typically comprise two spaced apart crush cans secured at one end to part of a vehicle body, and at the other end to a bumper beam, typically formed of metal. The crush can acts to absorb energy from a crash event by deforming, crumpling or even being significantly crushed. The crush can therefore serves to protect the vehicle occupants by absorbing a proportion of the crash energy in place of it being transferred more substantially to a vehicle cabin including the occupants, as well as protecting critical vehicle components that may otherwise become damaged if they are positioned in the impact region, by providing a crumple or crush zone around these components. Of course, the success of energy absorption systems to protect vehicle occupants and critical vehicle components can never be guaranteed. This depends also on the nature of the crash event.

More recently, crush cans have been formed of a composite material instead of the traditional metal construction, with the aim of reducing the weight of the crush can to assist in reducing the overall weight of a vehicle and therefore, in turn, reducing fuel or energy consumption of that vehicle. In addition, in some cases it is necessary to provide a longer length of metal crush can to allow for a sufficiently sized "crumple zone" for some impacts, along with a corresponding space behind the bumper beam to accommodate the body of metal which is crumpled during impact. The provision of a longer metal crush can increases both cost and weight of the component, which is undesirable.

Composite crush cans may demonstrate improved energy absorption as compared to traditional metal cans, depending on certain factors such as the material used for the crush can. However, it is also known for composite crush cans to shatter in response to absorbing the high amount of energy arising from an impact event and that is undesirable.

It is an aim of the present invention to address one or more of the disadvantages associated with the prior art.

US 2019/202387 discloses a rail extension, comprising: a base extending from an end of the rail extension, wherein the base includes vehicle rail attachments configured to attach to a vehicle rail; a front member configured for attachment to a bumper beam; a body extending from the base to the front member; wherein the body comprises reinforcing members; wherein the body comprises a first polymeric material; wherein the reinforcing members comprise a second polymeric material.

US 2020/324823 discloses an impact absorbing structure for a vehicle that includes a frame member formed of a resin material. The frame member includes a closed cross sectional portion extending in a vehicle front-rear direction, and a rib protruding at least either upward or downward from the closed cross sectional portion and extending in the vehicle front-rear direction.

JP 2021109506 discloses a vehicle body structure of a vehicle includes an impact absorption member provided between a bumper reinforcement and a vehicle body.

JP 2013159132 discloses a vehicle body structure includes: a load transmission member which is disposed at a vehicle body front side of a floor and transmits a load to the floor; and an impact absorbing body, which is disposed between the load transmission member and a front bumper, and which is formed in a hollow shape with a vehicle body rear side opened, wherein a vehicle body front-side part is formed smaller in an external shape than a vehicle body rear-side part, and reinforcement parts is formed which extend in the vehicle body longitudinal direction on walls of the vehicle body rear-side part so that yield strength of the vehicle body rear-side part 40 becomes higher than that of the vehicle body front-side part.

US 2022/266784 discloses a method for making a crush can for a vehicle which has an internal moulded structure can include providing a crush can with a hole, filling the hole in the crush can with a fibre-reinforced material and compression moulding the fibre-reinforced material using the internal shape of the crush can as an outer shell of a split mould.

### SUMMARY OF THE INVENTION

Aspects and embodiments of the invention provide a composite crush can, an energy absorbing system comprising the composite crush can and a vehicle comprising the composite crush can as claimed in the appended claims

According to an aspect of the present invention there is provided a composite crush can for a vehicle, the composite crush can comprising a first end and a second end, each disposed on a longitudinal axis of the composite crush can; an enclosing wall extending between the first end and the second end, the enclosing wall comprising a top wall and a bottom wall, and a first side wall and a second side wall, each of which being integrally formed with a lateral edge of each of the top wall and the bottom wall; and wherein a cross section of the enclosing wall is configured to taper inwardly from the first end towards the second end; and wherein at least a portion of one or more of the first side wall, second side wall, top wall and/ or bottom wall comprises one or more corrugations extending longitudinally between the first end and the second end. A composite crush can is a crush can made from composite material.

The term "corrugations" refers to any formation out of the plane of the surface of the enclosing wall, such as a recess, a ridge, a furrow or similar formation in the surface of the crush can. The one or more corrugations provide an increased number of corners (which may be angled corners or rounded corners) in the one or more parts of the enclosing wall. The enclosing wall itself may comprise corners, such as corners connecting the top wall and side wall, and/or the bottom wall and side wall. The increased number of corners in the crush can increases the strength of the component and enables can to crush uniformly along a longitudinal axis, without the initial buckling at the end of the crush can as seen with metal cans. This enables composite crush can to be shorter in length as compared to known metal ones, as the higher impact resistance of composites as compared to metal eliminates need to provide additional crushing/ buckling material in the front of the can as is needed with metal cans. The corrugations may be any shape. By way of non-limiting example, corrugations may be linear recesses of substantially continuous height along an axis, or may be substantially triangular, or may be tapered, or may be circular or square or any combination of these and/ or other shapes.

Optionally, in embodiments, the enclosing wall may be generally cylindrical with one or more corrugations provided therein. For example, the top wall, bottom wall and side walls may be curved and contiguous, to define a cylindrical shape. The cylindrical shape may also be tapered to provide a crush can having a larger diameter end, for example at a first end, tapering towards a smaller diameter end at a second, opposing end. Other shapes and configurations of crush can may be provided such as but not limited to rectangular shaped, or square shaped. Any of the other shapes of crush can may be provided, optionally with a tapered profile as per the embodiments of crush can described herein.

By tapering the cross section of the can from a larger cross section at the first, rearward end of the can towards a smaller cross section at the second, forward end of the can, more surface area becomes available during the crushing process, which corresponds to a greater ability to absorb impact energy with the increased amount of material towards the first, rearward end of the can.

Optionally, the material of the composite crush can comprise sheet moulding compound, optionally glass fibre sheet moulding compound and/or carbon fibre sheet moulding compound. Sheet moulding compound (SMC) is relatively low cost, as compared to other composites, and easy to handle during manufacturing, thus reducing manufacturing costs and improving ease of manufacturing. The structure of SMC also allows "predictable" shattering of the can during an impact, because the fibres within the resin are less randomly distributed as compared to some other composite materials.

Optionally, the crush can comprises at least one flange. Optionally, the at least one flange is integrally formed with the top wall, bottom wall, first side wall and or the second side wall at the first end. Integrally forming the at least one flange with a part of the top wall and/or bottom wall and/ or first side wall and/or second side wall means that the composite crush can is formed of a single composite part as compared to two traditional metal parts (a crush can and a flange) joined together.

Optionally, the top wall, bottom wall, first side wall and second side wall define a substantially rectangular cuboid can shape. This shape incorporates corners into the can, which stiffens and strengthens the can.

Optionally, the forward-most sections of the top and/ or bottom walls comprises a bevelled portion. The bevelled portion may slope away from each of the top and bottom walls, respectively, at the second, forward end of the crush can, i.e. towards a longitudinal midline of the can. The bevelled portions may be connected by an end wall. The end wall closes off the enclosing wall at the second, forward end of the can to define the generally rectangular cuboid shape.

The second end comprises an end wall. The end wall closes off the enclosing wall at the second, forward end of the can by connecting edges of the top wall, bottom wall and side walls with a corresponding edge of the end wall. This improves the component's response to impact as the energy from an impact is transferred from the end wall to each wall of the can. This also improves predictability of crushing.

The end wall comprises at least one corrugation. The at least one corrugation increases strength of the component as formation of the at least one corrugation increases the amount of material used to form the crush can which increases the amount of material available to absorb impact energy. The at least one corrugation can also be configured to accommodate neighbouring vehicle components, such as by customising the shape, size and/ or position of the at least one corrugation to suit the shape, size and/ or position of the adjacent vehicle component.

Optionally, the top wall, bottom wall, first side wall, second side wall and the end wall have a continuous surface. A continuous surface eliminates joints between the walls and may eliminate weak points in the can which results in an improvement in strength of the crush can.

The at least one corrugation in the end wall is contiguous with a corresponding at least one corrugation in the first side wall and/ or second side wall. This improves the crush can response to impact as impact energy is transferred through the contiguous corrugations which allows the can to crush more evenly and/ or more predictably across all walls of the can, along the longitudinal axis.

Optionally, the one or more corrugations comprise elongate recesses in one or more walls of the composite crush can. Recesses are relatively easy to form in the surface of the crush can and increase the surface area of the can, such as in the form of corners, which provides more surface area for absorbing impact energy. Optionally, at least one of the one or more corrugations comprises a planar portion. The planar portion may be parallel the wall in which the corrugation is formed.

The size and position of each corrugation relative to the wall in which it is formed may vary. For example, a corrugation in a wall may be in the region of one third of the height of the wall. In other examples, a corrugation in a wall may be in the region of half of the height of the wall, or a quarter of the height of the wall. A corrugation may be positioned along a longitudinal midline of a wall. A corrugation may be positioned towards an upper part of a wall, i.e. closest to a top wall or top surface of a crush can. A corrugation may be positioned towards a lower part of a wall, i.e. closest to a bottom wall or bottom surface of a crush can. Optionally, at least one of the one or more corrugations comprises one third of a portion of the first side wall and/or second side wall. A wall may comprise corrugations in one or more of these relative locations and/or in different locations. It is to be appreciated that the choice of location of the corrugation may vary for a number of reasons, such as to accommodate neighbouring components.

Optionally, the first side wall and/or the second side wall comprises two corrugations. Optionally the two corrugations are spaced apart on the first side wall and/or second side wall. Optionally, the two corrugations extend along the length of the side wall and, optionally, are spaced apart either side of a midline of the side wall, i.e. approximately mid-way between an upper edge of the side wall, adjacent the top wall, and a lower edge of the side wall, adjacent the bottom wall.

Optionally, at least a part of the upper corrugation is contiguous with an upper corrugation on the end wall. Optionally, at least part of the lower corrugation is contiguous with a lower corrugation on the end wall.

Optionally, two corrugations on the or each of the first side wall and/or second side wall comprise an upper corrugation and a lower corrugation. Optionally, at least a part of the upper corrugation is positioned in an upper third of the side wall, wherein the upper third of the side wall is adjacent to the top wall. Optionally, at least a part of the lower corrugation is positioned in a lower third of the side wall, wherein the lower third of the side wall is adjacent to the bottom wall.

Optionally, the one or more corrugations may have a depth of between 1mm and 5mm, inclusive, for example 2mm or 3mm or 4mm, at one or more points of the corrugation. Optionally, the one or more corrugations may have a variable depth. In other embodiments, the depth may be more than 5mm at one or more points in the corrugation. The "depth" is intended to refer to the distance by which the corrugation(s) extends away from the part of the enclosing wall into which it is formed, whether that extension away be in a direction away from the cavity (i.e. where the corrugation projects outwardly from the enclosing wall), or towards the centre of the cavity (i.e. where the corrugation is a recess, extending inwardly from the enclosing wall).

Optionally, the one or more corrugations comprise rounded corners. Optionally, the rounded corners are on one or more edges, for example peripheral edges, of each of the one or more corrugations. Rounded edges can more evenly distribute stress from impact energy and therefore reduce the risk of unpredictable fracturing which may occur in straight corners which have regions of increased stress concentrations.

Optionally, a radius of the rounded corners is between 4mm and 11mm, optionally 5mm or 7mm or 9mm. These values have been found to be effective at distributing stress arising from impact forces in embodiments of composite crush can.

Optionally, at least one of the one or more corrugations extends only partially along the top wall, bottom wall, first side wall and/ or second side wall. The provision of one or more corrugations extending only partially along the top wall, bottom wall, first side wall and/ or second side wall can allow the accommodation of fixing points or other components in and around the crush can.

Optionally, the one or more corrugations extend substantially the whole length of the top wall, bottom wall, first side wall and/ or second side wall between the first end and the second end. The provision of one or more corrugations extending the whole length of the top wall, bottom wall, first side wall and/ or second side wall between the first end and the second end increases the amount of material in the crush can and provides additional corners along the whole length of the wall(s), which increases strength of the crush can.

Optionally, at least one of the top wall, bottom wall, first side wall and/or second side wall have a thickness of between 2mm and 8mm, inclusive, for example, more than 3.5mm and less than or equal to 6mm, optionally 4mm. These thickness values have been found to be effective at increasing strength of embodiments of crush can as compared to known crush cans. A thickness value of more than 3.5mm, optionally 4mm has been found to be very effective at increasing strength of crush cans according to embodiments of the present invention as compared to known crush cans.

Optionally, at least a portion of the end wall has a thickness of between 3mm and 10mm. These thickness values have been found to be effective at increasing strength of embodiments of crush can as compared to known crush cans, as well as improving the ease with which the crush can is expelled from the mould during manufacturing in instances where expulsion from the mould is achieved by pressure applied to the end wall.

Optionally, one or more of the corrugations is symmetrical along at least one axis. Optionally, crush cans according to embodiments of the invention may comprise a symmetrical distribution of corrugations in the enclosing wall, about an axis. Other embodiments may comprise an asymmetrical distribution of corrugations in the enclosing wall, about an axis. Optionally, one or more of the corrugations is asymmetrical along at least one axis. Optionally, in embodiments, corrugation(s) on each of the first wall and second wall and/ or the top and bottom walls, are symmetrical relative to each other. In other embodiments, corrugation(s) on each of the first wall and second wall are asymmetrical relative to each other. At least some of the corrugations may be symmetrical relative to each other. The provision of symmetric and/ or asymmetric corrugations allows the crush can to be customised to fit into a particular environment around one or more other components which may or may not be at least partially accommodated in the corrugation(s). The provision of symmetric and/ or asymmetric corrugations enables customisation of the energy absorption properties of the crush can by changing any of the number, size, shape, position of each corrugation on the can.

Optionally, the crush can may be provided with one or more apertures for receiving mechanical or other fasteners for attaching the crush can to a part of a vehicle body and/or for attaching components to the crush can.

According to another aspect of the invention, there is provided an energy absorption system comprising a composite crush can according to embodiments of the invention.

According to further aspect of the invention, there is provided a vehicle comprising a composite crush can according to embodiments of the invention.

### BRIEF DESCRIPTION OF THE DRAWINGS

One or more embodiments of the invention will now be described, by way of example only, with reference to the accompanying drawings, in which:
Figure 1 shows a perspective view of a first side of a composite crush can according to an embodiment of the invention;
Figure 2A shows a perspective view of a second side of the composite crush can shown in Figure 1;
Figure 2B shows a perspective view of the second side of the composite crush can shown in Figure 2A, with the end wall omitted for the purpose of illustrating the shape of the enclosing wall of the composite crush can;
Figure 3 shows multiple views of the composite crush can shown in Figure 1 from different angles, namely: from a front aspect (looking from the end wall of the second, forward end of the can, and along the longitudinal axis of the can towards the flange attached to the first, rearward end of the can); from a rear aspect (looking from the first, rearward end, along the inside of the cavity of the can and towards the second, forward end of the can); side views of each of the first and second side walls; and plan views of the top wall and the bottom wall;
Figure 4 shows an energy absorption system comprising two composite crush cans according to the embodiment shown in Figure 1, attached to a bumper beam;
Figure 5 shows an exploded view of the energy absorption system shown in Figure 4;
Figure 6 shows a perspective view of a first side of a composite crush can according to another embodiment of the invention;
Figure 7A shows a perspective view of a second side of the composite crush can shown in Figure 6;
Figure 7B shows a perspective view of the second side of the composite crush can shown in Figure 7A, with the end wall omitted for the purpose of illustrating the shape of the enclosing wall of the composite crush can;
Figure 8 shows multiple views of the composite crush can shown in Figure 6 from different angles, namely: from a front aspect (looking from the end wall of the second, forward end of the can, and along the longitudinal axis of the can towards the flange attached to the first, rearward end of the can); from a rear aspect (looking from the first, rearward end, along the inside of the cavity of the can and towards the second, forward end of the can; side views of each of the first and second side walls; and plan views of the top wall and the bottom wall;
Figure 9 shows an energy absorption system comprising two composite crush cans according to the embodiment shown in Figure 6, attached to a bumper beam;
Figure 10 shows an exploded view of the energy absorption system shown in Figure 9;
Figure 11 shows a method of forming a composite crush can according to embodiments of the invention; and
Figure 12 shows a vehicle in accordance with an embodiment of the invention.

### DETAILED DESCRIPTION

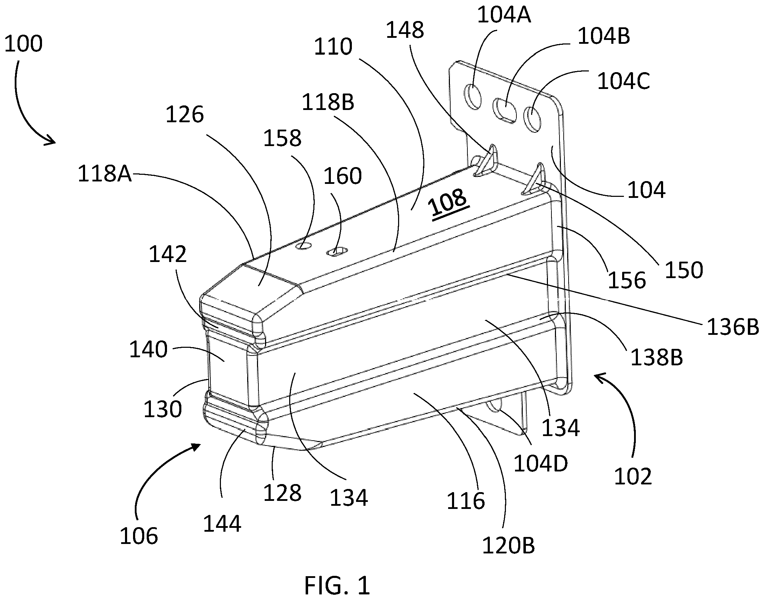

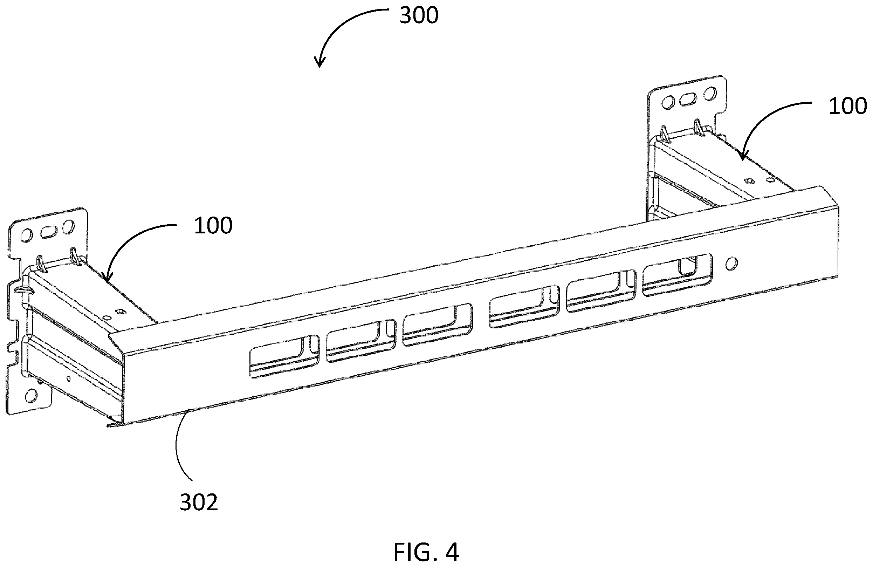

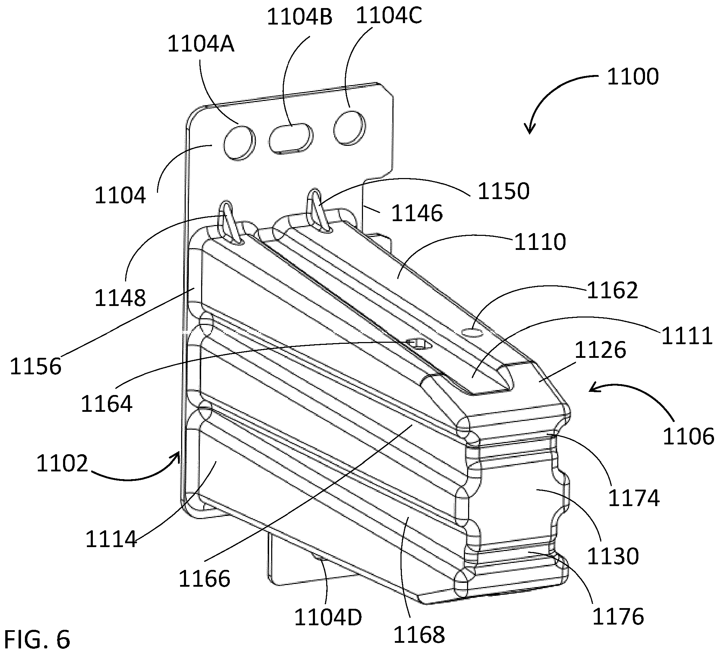

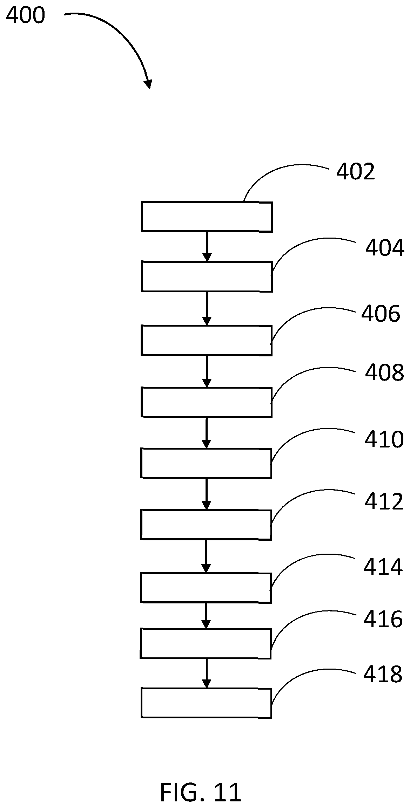

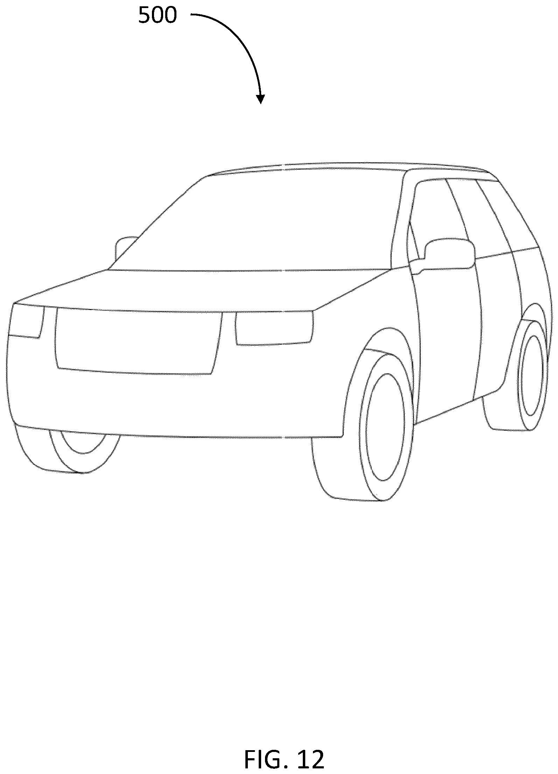

A composite crush can in accordance with an embodiment of the present invention is described herein with reference to the accompanying Figures 1 to 5. A composite crush can in accordance with another embodiment of the present invention is described herein with reference to the accompanying Figures 6 to 10. Figures 4, 5, 9 and 10 show embodiments of the composite crush can attached to a bumper beam as part of an energy absorption system. The energy absorption system may be attached to a vehicle, as shown in Figure 12. The vehicle in the present examples is an automobile, such as a wheeled vehicle, but it will be understood that the composite crush can may be used in other types of vehicle. A method according to an embodiment of the invention is also described with reference to Figure 11.

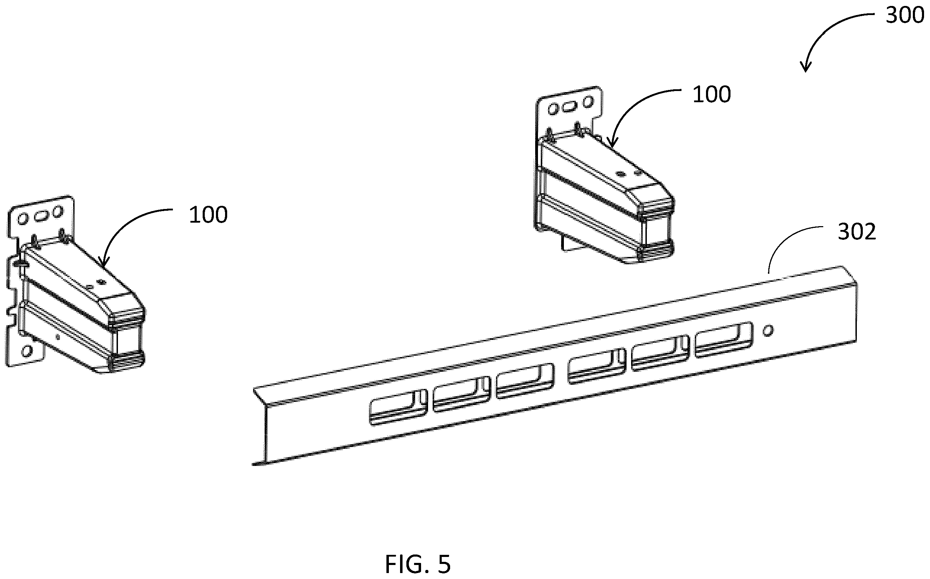

Figures 1, 2A, 2B and 3 show first and second sides of a composite crush can 100 according to an embodiment of the invention. The crush can 100 is hollow and generally rectangular cuboid in shape and comprises a first, open rearward end 102, comprising a flange 104 having a plurality of fixing apertures 104A, 104B, 104C, 104D for receiving fixing means (not shown) for attaching the crush can 100 to a portion of a vehicle body. The crush can 100 comprises a second, closed forward end 106 which can be bonded or otherwise attached to another part of an energy absorption system 300, such as to a bumper beam 302 (shown on Figures 4 and 5). The energy absorption system 300 may be attached to the front or the rear of the vehicle 500 (shown on Figure 12).

Figures 1, 2A, 2B and 3 show that the first end 102 and second end 106 are disposed at either end of the crush can 100 and are joined by an enclosing wall 108 which extends between the first end 102 and the second end 106 and forms the generally rectangular cuboid shape of the crush can 100. The enclosing wall 108 comprises a top wall 110, a bottom wall 112, and a first side wall 114 and a second side wall 116, each extending between the first end 102 and the second end 106. Each of the side walls 114, 116 extends between the first end 102 and the second end 106 and is integrally formed with a lateral edge 118A, 118B, 120A, 120B of each of the top wall 110 and the bottom wall 112, respectively. The enclosing wall 108 may comprise one or more apertures 122 for receiving mechanical fasteners, such as bolts, for securing the crush can 100 to other components (not shown) on a vehicle.

Figures 1, 2A, 2B and 3 show that the cross section of the enclosing wall 108 generally tapers inwardly from the first, open rearward end 102 towards the second, closed forward end 106. Consequently, the second, forward end 106 is of a smaller cross-section as compared to that of the first, rearward end 102. The tapered cross section provides an increasing amount of material available for absorbing impact forces along the longitudinal axis 101 from the smaller, second, forward end 106 towards the larger, first, rearward end 102.

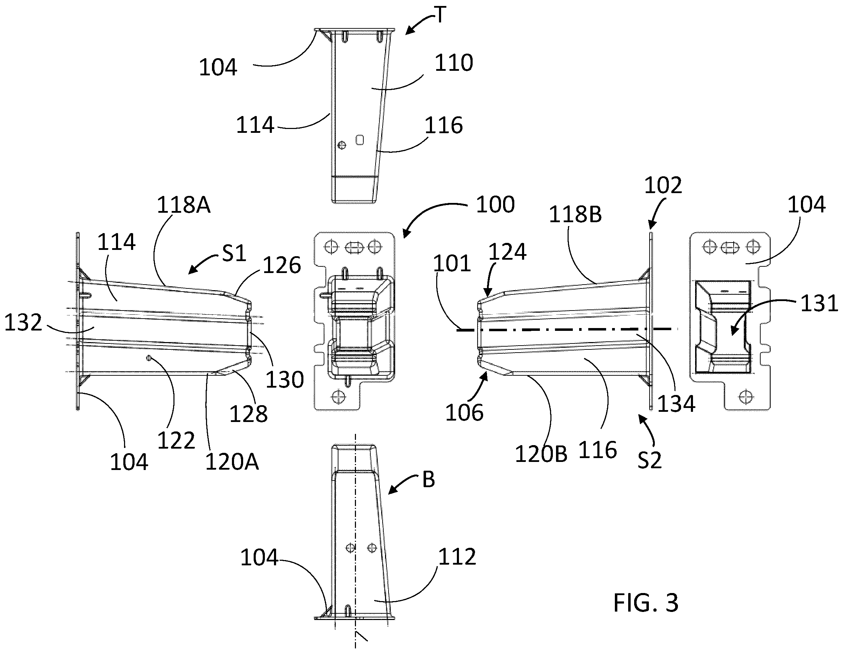

Figure 3 more specifically illustrates the tapered profile of the crush can 100 by showing a plan view T of the top wall 110, a plan view B of the bottom wall 112, a side view S1 of the first side wall 114 and a side view S2 of the second side wall 116. The top and bottom edges 118A, 118B, 120A, 120B of each side wall 114, 116 (which are delineated by each lateral edge 118A, 118B, 120A, 120B of the top wall 110 and bottom wall 112) converge from the first, rearward end 102 towards the second, forward end 106 to define a narrower "nose" portion 124 at the second, forward end 106 of the crush can 100. Plan views T and B show each of the top and bottom walls 110, 112 and the first side wall 114 extending substantially perpendicularly away from the flange 104 at the first, rearward end 102 of the crush can 100. The second side wall 116 extends in a longitudinal direction away from the first, rearward end 102 of the can 100 but comprises an inward taper which results in the crush can 100 having a smaller cross section at the second, forward end 106 of the can 100 and a larger, wider cross section at the first, rearward end 102 of the can 100. This tapered arrangement increases the surface area of the crush can 100 available for absorbing impact forces along the longitudinal axis 101 of the can 100 from the second, forward end 106 towards the first, rearward end 102.

Figures 1, 2A and 3 illustrate that the forward-most sections of the top and bottom walls 110, 112, each comprise a bevelled portion 126, 128 that slopes away from each of the top and bottom walls 110, 112, respectively, at the second, forward end 106 of the crush can 100. The bevelled portions 126, 128 are connected by an end wall 130 which closes off the enclosing wall 108 at the second, forward end 106 of the can 100 to define the generally rectangular cuboid shape. Collectively, the bevelled portions 126, 128 and end wall 130 define a "nose" section of the crush can 100 and provide a first, second and third contact surfaces 126, 128, 130 by which the crush can 100 may be bonded or otherwise secured to a bumper beam 302. The provision of multiple contact surfaces 126, 128, 130 for fixing the crush can 100 to a bumper beam 302 reduces the likelihood of separation of the bumper beam 302 and crush can 100 during an impact event.

Figure 3 shows that this embodiment of crush can 100 comprises a hollow cavity 131 although in other embodiments, the cavity 131 may be filled or partially filled, such as with an energy absorbing material (not shown).

Crush cans according to embodiments of the present invention comprise one or more corrugations in the enclosing wall 108. Corrugations may also be referred to as recesses (when the corrugations extend inwardly from the side wall 114, 116) or projections (when the corrugations extend outwardly from the side wall 114, 116).

Figures 1, 2 and 3 illustrate an elongate corrugation 132, 134 formed into each of the first 114 and second side walls 116. Each of the side wall corrugations 132, 134 extends longitudinally along the entire length of each side wall 114, 116 between the first end 102 and the second end 106 of the crush can 100, and is positioned midway between the top wall 110 and the bottom wall 112. Each side wall corrugation 132, 134 is of a continuous height along its respective side wall 114, 116. In embodiments, the height of each side wall corrugation 132, 134 is approximately one third of the height of the total height of the side wall 114, 116.

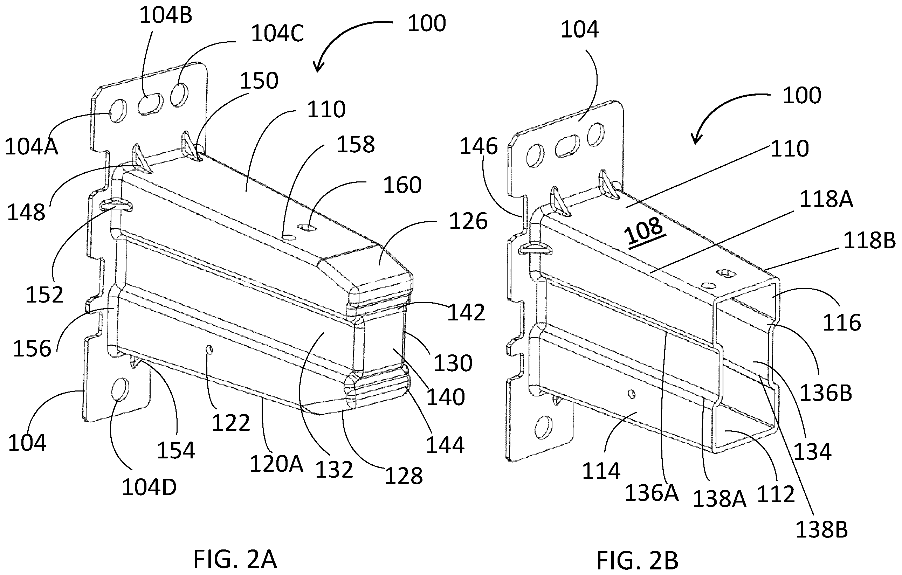

Each side wall corrugation 132, 134 comprises a planar portion which extends inwardly into the cavity 131 and away from the plane of its respective side wall 114, 116, but remains joined to the respective side wall via a respective upper shoulder 136A, 136B, and lower shoulder 138A, 138B which extend the length of the corrugation 132, 134. The shoulders 136A, 136B, 138A, 138B, for example shown on Figure 2B, are rounded corners or edges of the corrugation and increase the surface area of the enclosing wall 108. The increased surface area increases the strength of the crush can 100, as the amount of material available for absorbing crush impact is increased, as compared to a crush can without corrugations on its enclosing wall 108. Also, the corrugations resist bending of the crush can, which is not desirable.

Embodiments of the crush can may be provided with corrugations having rounded corners which are 5mm in their radius of curvature. In other embodiments, the radius of curvature of the rounded corners may be different, such as but not limited to 7mm or 9mm.

Figures 1 and 2A illustrate a corrugation 140 formed in the end wall 130 and which is contiguous with each of the first and second side wall corrugations 132, 134. The upper and lower edges of the end wall corrugation 140 are each joined to each of the bevelled portions 126, 128 via a respective rounded shoulder 142, 144.

It will be appreciated that a crush can according to one or more other embodiments of the invention may have different arrangements of corrugations on at least a portion of the first side wall 114 and/or second side wall 114 and/ or top wall 110 and/or bottom wall 112 of the can 100. It will also be appreciated that in some embodiments of the invention, the corrugations may be formed into different parts of the enclosing wall 108, such as but not limited to the top wall 110 and/or the bottom wall 112, and that the corrugations may or may not extend substantially the whole length of the enclosing wall 108. It will also be appreciated that the corrugations may be of different sizes and shapes and that their positioning on or around the enclosing wall 108 may differ between embodiments of the invention. For example, at least one of the one or more corrugations may extend only partially long the top wall 110 and/or bottom wall 112 and/or first side wall 114 and/or second side wall 116. The Figures are therefore intended to illustrate non-limiting examples of different configurations of corrugations on crush cans according to embodiments of the invention. The term "corrugations" is not limited to any particular form or shape, but is instead intended to refer to any shape or formation created in a surface of the enclosing wall 108 of the crush can 100. By way of non-limiting example, the corrugations may be generally planar recesses, curved recesses, ridges, grooves and/or any combination of the aforementioned examples and/ or other formation. Similarly, it will be appreciated that the rounded corners may, in other embodiments, be more or less rounded than those of the example embodiments herein. In embodiments, one or more of the rounded corners may be replaced with angular corners.

The combination of the shape of the enclosing wall 108 and the presence of the corrugations incorporates more corners into the crush can design which stiffens and strengthens the can. This enables cans according to embodiments of the present invention to absorb greater forces across a shorter distance during a crush event, as compared to known crush cans.

As shown in Figures 1, 2A, 2B and 3, the flange 104 at the first, rearward end 102 is integrally formed with the enclosing wall 108 and extends from the first end 102 in a direction substantially perpendicular relative to the enclosing wall 108. The crush can 100 is attachable to a part of a vehicle body via fixing means (not shown), such as bolts, each passing through one of the apertures 104A, 104B, 104C, 104D located on the flange 104. This reduces the risk that the crush can 100 and/ or other parts of the energy absorption system 300 will detach from the vehicle 500 during a crash event. One or more edges of the flange 104 may comprise one or more cut outs or recesses 146 for the purpose of accommodating other components when the crush can 100 is fitted to a vehicle 500.

As shown in Figure 2A, a plurality of moulded reinforcing or stiffening ribs 148, 150, 152, 154 are provided between the flange 104 and the enclosing wall 108 at spaced apart locations. These stiffening ribs 148, 150, 152, 154, which may be triangular, provide localised regions of stiffness between the faces of the enclosing wall 108 and flange 104 which reinforce and improve the integrity of the join between the enclosing wall 108 and the flange 104. In the present embodiment, the stiffening ribs 148, 150, 152, 154 are provided as equilateral triangles, having sides of a length between 14mm and 18mm, for example 16mm. The first end 102 of the enclosing wall 108 and the flange 104 are also joined together with a continuous rounded corner 156 that extends around the periphery of the enclosing wall 108 at the first end 102 of the can 10 and which in embodiments has a 5mm radius of curvature. However, in other embodiments, this radius of curvature may be different, such as but not limited to 7mm or 9mm. The stiffening ribs 148, 150, 152, 154 intersect the continuous rounded corner 156 between the flange 104 and the enclosing wall 108. The moulded stiffening ribs 148, 150, 152, 154 are optional features.

Figures 1, 2A and 2B illustrate two spaced apart apertures 158, 160 in the top wall 110 and positioned towards the second end 106 of the crush can 100. Fixing components (not shown) such as bolts can be threaded through these apertures 158, 160 to secure the second end 106 of the crush can 100 to one or more other components (not shown). The apertures 158, 160 may, in other embodiments, be positioned at different locations on the top wall 110 and/ or on one or more parts of the enclosing wall 108. In other embodiments, different numbers and/or shapes of apertures may be provided.

Figure 4 shows a view of two crush cans 100 according to the above-described embodiment of the invention and a bumper beam 302 of a vehicle, to which the crush cans 100 are attached to form an energy absorption system 300.

Figure 5 shows an exploded view of the energy absorption system 300 shown in Figure 4. As seen from Figures 4 and 5, the nose portion 124 at the second end 106 of the crush can 100 is attached to a rear-facing side of the bumper beam 302 via each of the end wall 130 and bevelled portions 126, 128 of the crush can. Using multiple attachment surfaces such as the end wall and two bevelled portions 126, 128 allows for a more secure bond or fixing between each crush can 100 and the bumper beam 302.

Figures 6 to 10 illustrate another embodiment of crush can 1100. This embodiment of can 1100 has substantially the same generally rectangular cuboid hollow box shape as the previous embodiment, but has a different configuration of corrugations to those of the embodiment described above and shown in Figures 1 to 5.

Figures 6, 7A, 7B and 8 demonstrate that this embodiment of crush can 1100 has the same general shape of enclosing wall 1108 which extends between a first end 1102 and a second end 1106 and forms a generally rectangular cuboid shape of the crush can 1100. Similarly to the above-described embodiment, the enclosing wall 1108 of the present embodiment comprises a top wall 1110, a bottom wall 1112, a first side wall 1114 and a second side wall 1116, each extending between a first rearward end 1102 of the can and a second, forward end 1106. Each of the side walls 1114, 1116 is integrally formed with lateral edges 1118A, 1118B, 1120A, 1120B of each of the top wall 1110 and bottom wall 1112, respectively. The enclosing wall 1108 may comprise one or more apertures 1122 for receiving fasteners, such as bolts, for securing the crush can 1100 to other components (not shown) on a vehicle.

Figures 6, 7A, 7B and 8 show that the first, rearward end 1102 comprises a flange 1104 positioned at the first, rearward end 1102 of the can 1100 and extending substantially perpendicularly relative to the enclosing wall 1108, as in the above-described embodiment of can 100. The flange 1104 is integrally formed with the enclosing wall 1108 and comprises a plurality of apertures 1104A, 1104B, 1104C, 1104D for receiving fixing means (not shown) such as bolts for securing the crush can 1100 can to a vehicle body to reduce the risk that the crush can 1100 will detach from the vehicle 500 during a crash event. One or more edges of the flange 1104 may comprise one or more cut outs or recesses 1146 for the purpose of accommodating other components when the crush can 1100 is fitted to a vehicle 500.

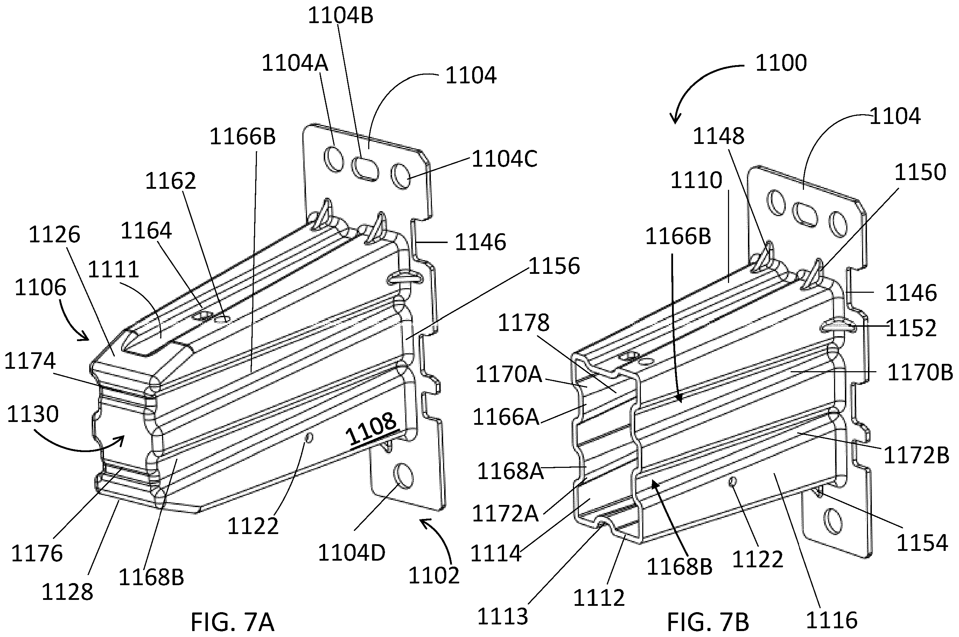

Figure 7B shows that a plurality of moulded stiffening ribs 1148, 1150, 1152, 1154 are pressed into or otherwise connected to each of the flange 1104 and the enclosing wall 1108 at spaced apart locations. These stiffening ribs 1148, 1150, 1152, 1154, which in embodiments may be triangular, provide localised regions of stiffness between the faces of the enclosing wall 1108 and flange 1104 which assist in providing the integrity of the join between the enclosing wall 1108 and the flange 1104. In the present embodiment, the stiffening ribs 1148, 1150, 1152, 1154 are provided as equilateral triangles, having sides of a length between 14mm and 18mm, for example 16mm. The first end 1102 of the enclosing wall 1108 and the flange 1104 are also joined together with a continuous rounded corner 1156 which in embodiments has a 5mm radius of curvature. However, in other embodiments, this radius of curvature may be different, such as but not limited to 7mm or 9mm. The stiffening ribs 1148, 1150, 1152, 1154 intersect the continuous rounded corner 1156 of the flange 1104, as shown for example in Figure 6.

Figure 7A shows that the top wall 1110 comprises two spaced apart generally circular apertures 1162, 1164, positioned towards the second end 1104 of the crush can 1100. Fixing components (not shown) such as bolts can be threaded through these apertures 1162, 1164 to secure the crush can 1100 to one or more other components of a vehicle 500. The apertures 1162, 1164 may, in other embodiments, be positioned at different locations on the top wall 1110 and/ or on one or more parts of the enclosing wall 1108.

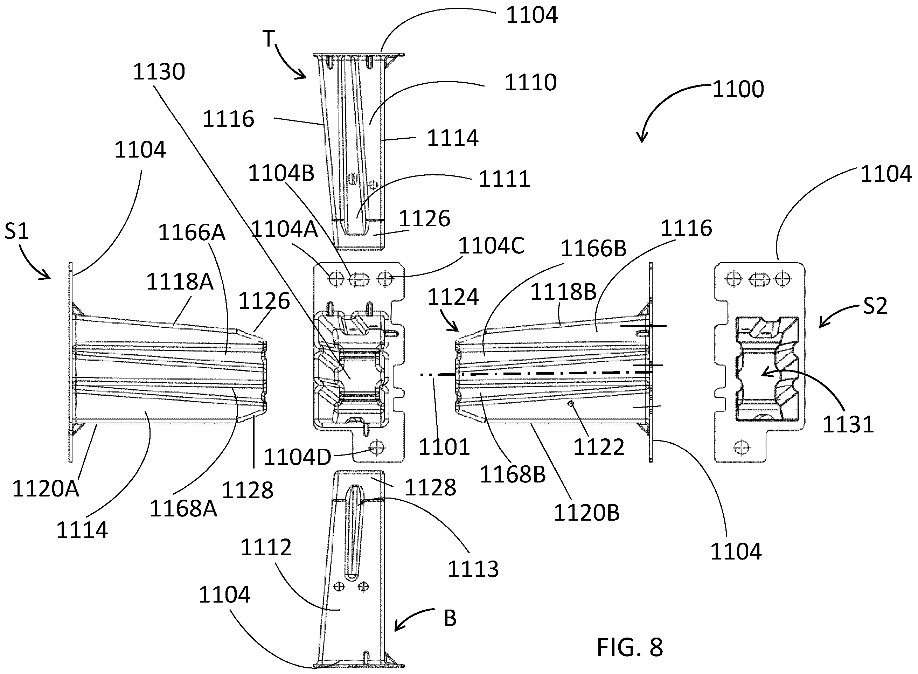

Figure 8 more specifically illustrates the tapered profile of the crush can 1100 by showing a plan view T of the top wall 1110, a plan view B of the bottom wall 1112, a side view S1 of the first side wall 1114 and a side view S2 of the second side wall 1116. The top and bottom edges 1118A, 1118B, 1120A, 1120B of each side wall 1114, 1116 (which are delineated by each lateral edge 1118A, 1118B, 1120A, 1120B of the top wall 1110 and bottom wall 1112, respectively) converge from the first, rearward end 1102 towards the second, forward end 1106 to define the narrower "nose" portion 1124 at the second, forward end 1106 of the crush can 1100. Plan views T and B show that each of the top and bottom walls 1110, 1112 extend away from the flange 1104 and gradually taper towards each other towards the second end 1106 of the can 1100. Plan views T and B also show that the first side wall 1114 extends substantially perpendicularly away from the flange 1104 at the first, rearward end 1102 of the crush can 1100. The second side wall 1116 extends in a longitudinal direction away from the first, rearward end 1102 of the can 1100 but comprises an inward taper towards the second end 1106 which results in the crush can 1100 having a smaller cross section at the second, forward end 1106 of the can 1100 and a larger, wider cross section at the first, rearward end 1102 of the can 1100. The tapered cross section provides an increasing amount of material available for absorbing impact forces along the longitudinal axis 1101 from the second, forward end 1106 towards the first, rearward end 1102.

Figures 7A and 8 show that this embodiment of crush can 1100 comprises bevelled portions 1126, 1128 at the forward-most sections of the top and bottom walls 1110, 1112, respectively. The bevelled portions 1126, 1128 are connected by an end wall 1130 which closes off the enclosing wall 1108 at the second forward end 1106 of the can to define a "nose" section 1124 of this embodiment of crush can 1100. The bevelled portions 1126, 1128 have the same function and benefits as in the above-described embodiment, namely to provide multiple surfaces by which the crush can 1100 may be bonded or otherwise secured to a bumper beam 302, to reduce the likelihood of separation of the bumper beam 302 from the crush can 1100 during an impact event.

In combination, the enclosing wall 1108 and end wall 1130 define an internal cavity 1131 of the crush can 1100, which in embodiments is a hollow cavity, shown in Figure 8. Optionally, the cavity 1131 may be filled with an energy absorbing material, such as but not limited to a fibre-reinforced material and/ or a foam. Optionally, in embodiments, the cavity 1131 may comprise one or more internally positioned walls which divide the cavity into a plurality of sections. Optionally, the one or more walls may be moulded in the crush can.

Figures 6, 7A, 7B and 8 also demonstrate the different configurations of corrugations in this embodiment of crush can 1100 as compared to the above-described can 100. The top wall 1110 comprises a generally triangular elongate corrugation 1111 which extends substantially the length of the top wall 1110, terminating just aft of the end wall 1130, within the bevelled portion 1126. The generally triangular, elongate corrugation 1111 has a wider base portion at the second, forward end 1106 of the can 1110 which coincides with the bevelled portion 1126. The triangular corrugation 1111 tapers inwardly as it extends longitudinally towards the first end to form a narrow tip positioned at the first, rearward end 1102 of the can 1100, adjacent the flange 1104, as can be seen on Figure 8.

Figures 7B and 8 show that the bottom wall 1112 comprises a generally triangular elongate corrugation 1113 which extends just over half of the length of the bottom wall 1112, terminating just aft of a longitudinal midpoint of the bottom wall 1112. The elongate corrugation 1113 has a wider base portion in the region of the second, forward end 1106 of the can 1100 which coincides with the bevelled portion 1128. The triangular elongate corrugation 1113 tapers inwardly as it extends longitudinally towards the first end to form a narrower tip which is positioned approximately half way along the length of the bottom wall 1110 of the can 1100, to form the generally triangular shaped corrugation 1113.

Figures 6, 7A, 7B and 8 show that the first side wall 1114 of this embodiment of crush can 1100 comprises two generally triangular shaped, upper and lower recessed corrugations 1166A, 1168A, which extend along the length of the side wall 1114 between the first end 1102 and the second end 1106. The second side wall 1116 also comprises two generally triangular shaped, upper and lower recessed corrugations 1166B, 1168B which extend along the length of the side wall 1116 between the first end 1102 and the second end 1106. The upper-most side wall corrugation 1166A, 1166B is positioned in the upper half of each side wall 1114, 1116, respectively, approximately one-third of the way down the side wall 1114, 1116 from the rounded corner 1118A, 1118B that connects each side wall 1114, 1116 with a respective side of the top wall 1110. A lower-most side wall corrugation 1168A, 1168B is positioned in the lower half of each side wall, approximately two-thirds of the way down the side wall 1114, 1116 from the rounded corner 1118A, 1118B connecting the side wall 1114, 1116 with the top wall 1110.

Each of the side wall corrugations 1166A, 1166B, 1168A, 1168B comprises a triangular shaped planar portion which extends inwardly in the direction of the cavity 1131 and away from the plane of its respective side wall 1114, 1116, but remains joined to the respective side wall via a shoulder 1170A, 1170B, 1172A, 1172B which extends around the periphery of each side wall corrugation. The shoulder 1170A, 1170B, 1172A, 1172B is a rounded corner or edge of the corrugation and increases the surface area of the enclosing wall 108 to increase the strength of the crush can 1100 as per the previously-described embodiment. Embodiments of the crush can 1100 may be provided with corrugations 1166A, 1166B, 1168A, 1168B having shoulders or rounded corners 1170A, 1170B, 1172A, 1172B which are 5mm in their radius of curvature. In other embodiments, the radius of curvature of the rounded corners may be different, such as but not limited to 7mm or 9mm. As shown in Figures 6, 7A, 7B and 8, the wider "base" portion of each triangular corrugation is located at the second, forward end 1106 of the can 1100, and the pointed tip of each triangular corrugation is located at the first, rearward end 1102 of the can 1100, adjacent the flange 1104.

Referring to Figure 7A, the end wall 1130 comprise an upper corrugation 1174 and a lower corrugation 1176, each of which extend between the first side wall 1114 and the second side wall 1116. The upper end wall corrugation 1174 is contiguous with a part of the upper corrugation 1166A, 1166B on each side wall 1114, 1116. The lower end wall corrugation 1176 is contiguous with a part of the lower corrugation 1168A, 1168B on each side wall 1114, 1116.

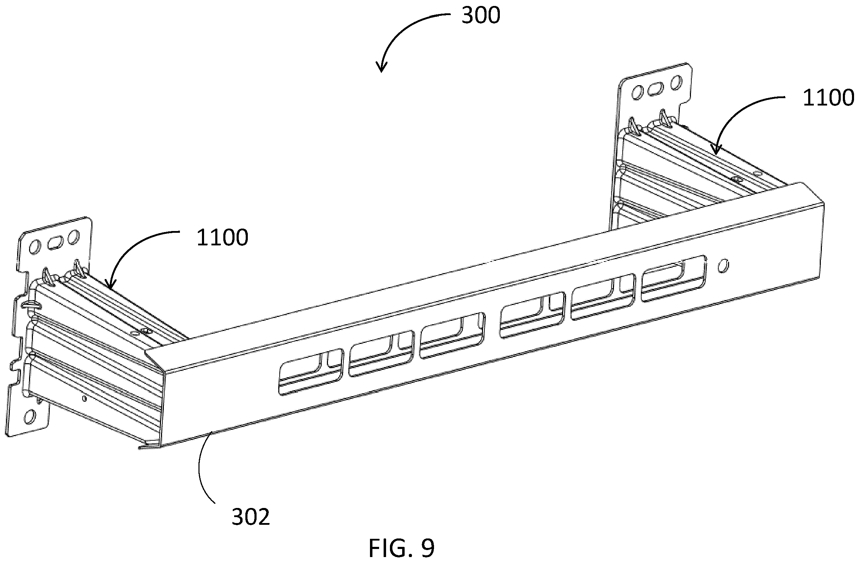

Figure 9 shows a view of two crush cans 1100 according to the above-described embodiment of the invention and a bumper beam 302 of a vehicle, to which the crush cans 1100 are attached to form an energy absorption system 300.

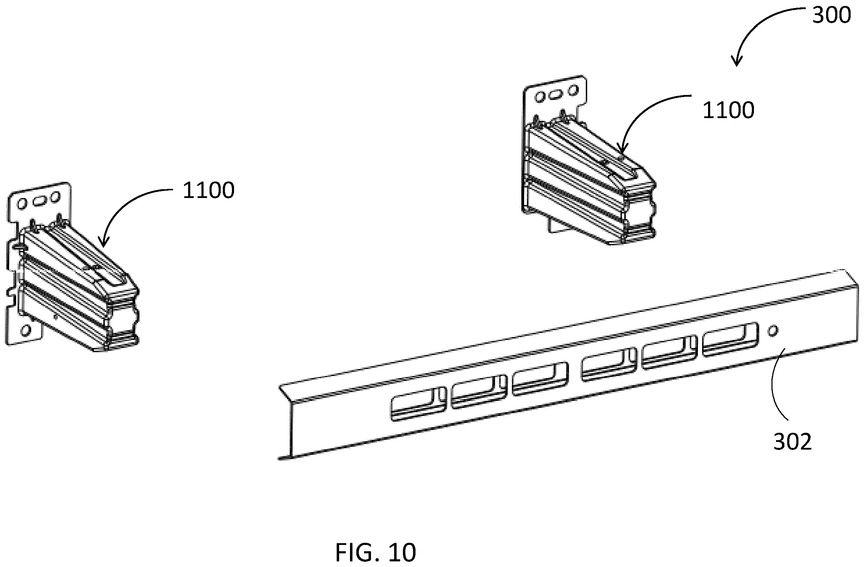

Figure 10 shows an exploded view of the energy absorption system 300 shown in Figure 9. As seen from Figures 9 and 10, the nose portion 1124 at the second end 1106 of the crush can 1100 is attached to a rear-facing side of the bumper beam 302 via each of the end wall 130 and bevelled portions 1126, 1128 of the crush can 1100. Using multiple attachment surfaces such as the end wall and two bevelled portions 1126, 1128 allows for a more secure bond or fixing between each crush can 1100 and the bumper beam 302.

A method 400 of manufacturing a crush can in accordance with an embodiment of the invention will be described with reference to Figure 11. Embodiments of crush can according to the invention comprise sheet moulding compound (SMC). The SMC comprises a polymeric matrix having a plurality of short, randomly-orientated fibres embedded therein. Although SMC is not isotropic per se, it is considered more isotropic than other composite fibres and the present inventors have found the specific selection of SMC to be particularly beneficial in a crush can application, as the inventors were able to determine that SMC absorbed more energy as compared to other composite materials, on the basis that when subjected to crush impact, SMC produced smaller pieces of debris as compared to other composite materials, indicative of a higher energy absorption.

Embodiments of the invention may be formed from glass fibre sheet moulding compound and/ or carbon fibre sheet moulding compound. It is known that the amount of energy absorbed by a composite crush can per unit mass and/or per unit volume may be higher than for an equivalent metal crush can, thus enabling the length of the composite crush can to be reduced as compared to the equivalent metal crush can. However, the use of sheet moulding compound in embodiments of the present invention provides further benefits, including being relatively inexpensive, easy to handle during manufacturing and corrosion resistant. Sheet moulding compound is also particularly useful in the present invention as its structure, namely the arrangement of fibres in the resin, allows for a more predictable shattering pattern of the can after impact, as compared to other materials.

In a first step 402 of the method 400 shown in Figure 11, plies of SMC are cut into a pre-determined size from a quantity of roomtemperature SMC.

In a next step 404, multiple plies are stacked up and each stack (charge) is weighed to ensure compliance with a pre-determined density, and the weight of the stack adjusted if necessary. As an example, a pre-determined density may be between 1.0 to 1.8 g/cm³. Pre-forming of the SMC charges is not necessarily an essential step, but may be performed in one or more embodiments.

In a next step 406, a mould cavity is heated to achieve a predefined temperature at one or more points in the mould. It will be appreciated that the predefined temperature(s) may vary depending on the type of SMC used for the moulding process and/ or other factors. The mould is shaped in accordance with the desired crush can shape. For example, one or more parts of the mould may be angled to produce a crush can comprising a taper, for example to form a draft angle to facilitate removal of a mould tool and/or to facilitate removal of the moulded crush can from the mould after curing.

In a next step 408 each SMC stack (charge) is introduced 408 into the open, heated mould cavity. One or more of the internal surfaces of the mould may be angled or tapered to provide suitable draft angle for releasing the moulded crush can from the mould after curing. It will be appreciated that the draft angle may vary between embodiments of the crush can, depending on other factors, such as but not limited to the overall size and shape of the resulting crush can, as well as the characteristics of the material being used for the moulding process. As an example, a draft angle may be a minimum of 1° for shallower parts. A draft angle of 5° may be suitable for all parts, irrespective of the depth of the part.

In a next step 410, the mould is closed and the closing force of the mould is set 410 at a predetermined force depending on the material being moulded. As an example, a closing force of between 1,000 - 10,000 kN may be suitable. It is to be appreciated that this force may also vary depending on the number of parts per mould. For example, the closing force may be higher than this example range if there is a large number of parts per mould.

In a next step 412, dynamic compression of the charge occurs during which the can is formed through the compression of the top part of the mould tool into the bottom part of the mould tool. This dynamic compression causes the material to move and flow through the tool as the charge becomes compressed, and the shape of the can is formed.

In a next step 414, static compression and/or curing and/or polymerisation occurs. It will be appreciated that the duration of this step will vary depending on a number of factors, including the material used for the charge, the thickness of the parts etc. As an example, this static compression/ curing/ polymerisation step may last between 30 to 90 seconds per mm thickness of material. Non-limiting examples of the curing process may include heating, cooling, chemical curing means and/or light exposure.

In a next step 416, the mould is opened and the moulded composite crush can is ejected out of the mould. As a non-limiting example, ejection of the crush can may be achieved by applying pressure to the end wall 130, 1130 of the can 100 using a punch tool to remove the can from the mould.

The next step 418 comprises a cooling phase and optionally further geometric modifications to the moulded crush can as well as any required machining and/or cleaning of the moulded can.

It will be appreciated that various changes and modifications can be made to the present invention without departing from the scope of the present application as defined by the appended claims.

## Claims

1. A composite crush can (100; 1100) for a vehicle, the composite crush can comprising:
a first end (102; 1102) and a second end (106; 1106), each disposed on a longitudinal axis of the composite crush can, wherein the second end comprises an end wall (130, 1130), the end wall comprising at least one corrugation (140; 1174, 1176);
an enclosing wall (108; 1108) extending between the first end and the second end, the enclosing wall comprising a top wall (110; 1110) and a bottom wall (112; 1112), and
a first side wall (114; 1114) and a second side wall (116; 1116), each of which being integrally formed with a lateral edge (118A, 118B, 120A, 120B; 1118A, 1118B, 1120A, 1120B) of each of the top wall and the bottom wall; and
wherein a cross section of the enclosing wall is configured to taper inwardly from the first end towards the second end; and
wherein at least a portion of one or more of the first side wall, second side wall, top wall and/or bottom wall comprises one or more corrugations (132, 134; 1111, 1113, 1166A, 1168A, 1166B, 1168B) extending longitudinally between the first end and
the second end; and
wherein the at least one corrugation in the end wall is contiguous with a corresponding one or more corrugations in the first side wall and/ or second side wall.

2. A composite crush can according to claim 1, wherein the composite crush can comprises sheet moulding compound, optionally glass fibre sheet moulding compound and/or carbon fibre sheet moulding compound.

3. A composite crush can according to claim 1 or claim 2, comprising at least one flange (104; 1104)
optionally wherein the at least one flange is integrally formed with the top wall, bottom wall, first side wall and/ or the second side wall at the first end.

4. A composite crush can according to claim 3, comprising one or more reinforcing ribs (148, 150, 152, 154; 1148, 1150, 1152, 1154),
optionally wherein the one or more reinforcing ribs are formed between the flange and a part of the enclosing wall.

5. A composite crush can according to any preceding claim, wherein the one or more corrugations comprise elongate recesses in one or more walls of the composite crush can.

6. A composite crush can according to any preceding claim, wherein each of the first side wall and/ or the second side wall comprises two corrugations.

7. A composite crush can according to claim 6, wherein the two corrugations on the or each of the first side wall (1114) and/or second side wall (1116) comprise an upper corrugation (1166A, 1166B) and a lower corrugation (1168A, 1168B) wherein
at least a part of the upper corrugation is positioned in an upper half of the side wall, wherein the upper half of the side wall is adjacent to the top wall (1110)
and/ or at least a part of the lower corrugation is positioned in a lower half of the side wall, wherein the lower half of the side wall is adjacent to the bottom wall (1112).

8. A composite crush can according to claim 7, wherein at least a part of the upper corrugation is contiguous with an upper corrugation (1174) on the end wall, and/or at least a part of the lower corrugation is contiguous with a lower corrugation (11176) on the end wall.

9. A composite crush can according to any preceding claim, wherein at least one of the one or more corrugations comprises a planar portion, optionally the planar portion being parallel the wall in which the corrugation is formed.

10. A composite crush can according to any preceding claim, wherein the one or more corrugations comprise rounded corners (136A, 136B, 138A, 138B; 1118A, 1118B) optionally wherein the rounded corners are on one or more edges of each of the one or more corrugations and optionally wherein a radius of the rounded corners is between 4mm and 11mm, optionally 5mm or 7mm or 9mm.

11. A composite crush can according to any preceding claim , wherein at least one of the one or more corrugations extend the whole length of the top wall, bottom wall, first side wall and/ or second side wall between the first end and the second end.

12. A composite crush can according to any preceding claim, wherein at least one of the top wall, bottom wall, first side wall and/or second side wall have a thickness of between 2mm and 8mm, inclusive, optionally 4mm, and/or wherein at least a portion of the end wall has a thickness of between 3mm and 10mm.

13. A vehicle comprising a composite crush can according to any of claims 1 to 12.

## Patentansprüche

1. Verbundverlängerungsschiene (100; 1100) für ein Fahrzeug, die Verbundverlängerungsschiene umfassend:
ein erstes Ende (102; 1102) und ein zweites Ende (106; 1106), die jeweils auf einer Längsachse der Verbundverlängerungsschiene angeordnet sind, wobei das zweite Ende eine Endwand (130, 1130) umfasst, die Endwand umfassend mindestens eine Riffelung (140; 1174, 1176);
eine umschließende Wand (108; 1108), die sich zwischen dem ersten Ende und dem zweiten Ende erstreckt, die umschließende Wand umfassend eine obere Wand (110; 1110) und eine untere Wand (112; 1112), und
eine erste Seitenwand (114; 1114) und eine zweite Seitenwand (116; 1116), die jeweils einstückig mit einer Seitenkante (118A, 118B, 120A, 120B; 1118A, 1118B, 1120A, 1120B) von jeder der oberen Wand und der unteren Wand ausgebildet sind; und
wobei ein Querschnitt der umschließenden Wand konfiguriert ist, um sich von dem ersten Ende zu dem zweiten Ende hin nach innen zu verjüngen; und
wobei mindestens ein Abschnitt von einem oder mehreren der ersten Seitenwand, der zweiten Seitenwand, der oberen Wand und/oder der unteren Wand eine oder mehrere Riffelungen (132, 134; 1111, 1113, 1166A, 1168A, 1166B, 1168B) umfasst, die sich in Längsrichtung zwischen dem ersten Ende und dem zweiten Ende erstrecken; und
wobei die mindestens eine Riffelung in der Endwand mit einer oder mehreren entsprechenden Riffelungen in der ersten Seitenwand und/oder der zweiten Seitenwand zusammenhängend ist.

2. Verbundverlängerungsschiene nach Anspruch 1, wobei die Verbundverlängerungsschiene einen Plattenformverbund, optional einen Glasfaserplattenformverbund und/oder einen Kohlenstofffaserplattenformverbund, umfasst.

3. Verbundverlängerungsschiene nach Anspruch 1 oder Anspruch 2, umfassend mindestens einen Flansch (104; 1104), wobei der mindestens eine Flansch optional einstückig mit der oberen Wand, der unteren Wand, der ersten Seitenwand und/oder der zweiten Seitenwand am ersten Ende ausgebildet ist.

4. Verbundverlängerungsschiene nach Anspruch 3, umfassend eine oder mehrere Verstärkungsrippen (148, 150, 152, 154; 1148, 1150, 1152, 1154), wobei die eine oder mehreren Verstärkungsrippen optional zwischen dem Flansch und einem Teil der umschließenden Wand ausgebildet sind.

5. Verbundverlängerungsschiene nach einem der vorstehenden Ansprüche, wobei die eine oder mehreren Riffelungen längliche Aussparungen in einer oder mehreren Wänden der Verbundverlängerungsschiene umfassen.

6. Verbundverlängerungsschiene nach einem der vorstehenden Ansprüche, wobei die eine oder mehreren Riffelungen längliche Aussparungen in einer oder mehreren Wänden der Verbundverlängerungsschiene umfassen.

7. Verbundverlängerungsschiene nach Anspruch 6, wobei die beiden Riffelungen an der oder jeder der ersten Seitenwand (1114) und/oder der zweiten Seitenwand (1116) eine obere Riffelung (1166A, 1166B) und eine untere Riffelung (1168A, 1168B) umfassen, wobei mindestens ein Teil der oberen Riffelung in einer oberen Hälfte der Seitenwand positioniert ist, wobei die obere Hälfte der Seitenwand an die obere Wand (1110) angrenzt und/oder mindestens ein Teil der unteren Riffelung in einer unteren Hälfte der Seitenwand positioniert ist, wobei die untere Hälfte der Seitenwand an die untere Wand (1112) angrenzt.

8. Verbundverlängerungsschiene nach Anspruch 7, wobei mindestens ein Teil der oberen Riffelung mit einer oberen Riffelung (1174) an der Stirnwand zusammenhängend ist, und/oder mindestens ein Teil der unteren Riffelung mit einer unteren Riffelung (11176) an der Endwand zusammenhängend ist.

9. Verbundverlängerungsschiene nach einem der vorstehenden Ansprüche, wobei mindestens eines der einen oder mehreren Riffelungen einen ebenen Abschnitt umfasst, der optional parallel zu der Wand verläuft, in der die Riffelung ausgebildet ist.

10. Verbundverlängerungsschiene nach einem der vorstehenden Ansprüche, wobei die eine oder mehreren Riffelungen abgerundete Ecken (136A, 136B, 138A, 138B; 1118A, 1118B) umfassen, optional wobei die abgerundeten Ecken an einer oder mehreren Kanten jeder der einen oder mehreren Riffelungen sind und optional wobei ein Radius der abgerundeten Ecken zwischen 4 mm und 11 mm beträgt, optional 5 mm oder 7 mm oder 9 mm.

11. Verbundverlängerungsschiene nach einem der vorstehenden Ansprüche, wobei sich mindestens eines der einen oder mehreren Riffelungen über die gesamte Länge der oberen Wand, unteren Wand, ersten Seitenwand und/oder zweiten Seitenwand zwischen dem ersten Ende und dem zweiten Ende erstreckt.

12. Verbundverlängerungsschiene nach einem der vorstehenden Ansprüche, wobei mindestens eines der oberen Wand, unteren Wand, ersten Seitenwand und/oder zweiten Seitenwand eine Dicke zwischen 2 mm und 8 mm, einschließlich, optional 4 mm, aufweist und/oder wobei mindestens ein Abschnitt der Endwand eine Dicke zwischen 3 mm und 10 mm aufweist.

13. Fahrzeug, umfassend eine Verbundverlängerungsschiene nach einem der Ansprüche 1 bis 12.

## Revendications

1. Boîte d'écrasement composite (100 ; 1100) pour un véhicule, la boîte d'écrasement composite comprenant :
une première extrémité (102 ; 1102) et une seconde extrémité (106 ; 1106), chacune disposée sur un axe longitudinal de la boîte d'écrasement composite, dans laquelle la seconde extrémité comprend une paroi d'extrémité (130, 1130), la paroi d'extrémité comprenant au moins une cannelure (140 ; 1174, 1176) ;
une paroi d'enceinte (108 ; 1108) s'étendant entre la première extrémité et la seconde extrémité, la paroi d'enceinte comprenant une paroi supérieure (110 ; 1110) et une paroi inférieure (112 ; 1112), et
une première paroi latérale (114 ; 1114) et une seconde paroi latérale (116 ; 1116), chacune étant formée d'un seul tenant avec un bord latéral (118A, 118B, 120A, 120B ; 1118A, 1118B, 1120A, 1120B) de chacune de la paroi supérieure et de la paroi inférieure ; et
dans laquelle une section transversale de la paroi d'enceinte est conçue pour se rétrécir vers l'intérieur de la première extrémité vers la seconde extrémité ; et
dans laquelle au moins une partie d'une ou de plusieurs parmi la première paroi latérale, la seconde paroi latérale, la paroi supérieure et/ou la paroi inférieure comprend une ou plusieurs cannelures (132, 134 ; 1111, 1113, 1166A, 1168A, 1166B, 1168B) s'étendant longitudinalement entre la première extrémité et la seconde extrémité ; et
dans laquelle l'au moins une cannelure dans la paroi d'extrémité est contiguë à une ou plusieurs cannelures correspondantes dans la première paroi latérale et/ou la seconde paroi latérale.

2. Boîte d'écrasement composite selon la revendication 1, dans laquelle la boîte d'écrasement composite comprend un préimprégné, éventuellement un préimprégné de fibre de verre et/ou un préimprégné de fibre de carbone.

3. Boîte d'écrasement composite selon la revendication 1 ou la revendication 2, comprenant au moins une bride (104 ; 1104), éventuellement dans laquelle l'au moins une bride est formée d'un seul tenant avec la paroi supérieure, la paroi inférieure, la première paroi latérale et/ou la seconde paroi latérale au niveau de la première extrémité.

4. Boîte d'écrasement composite selon la revendication 3, comprenant une ou plusieurs nervures de renforcement (148, 150, 152, 154 ; 1148, 1150, 1152, 1154), éventuellement dans laquelle la ou les nervures de renforcement sont formées entre la bride et une partie de la paroi d'enceinte.

5. Boîte d'écrasement composite selon l'une quelconque revendication précédente, dans laquelle la ou les cannelures comprennent des évidements allongés dans une ou plusieurs parois de la boîte d'écrasement composite.

6. Boîte d'écrasement composite selon l'une quelconque revendication précédente, dans laquelle chacune de la première paroi latérale et/ou de la seconde paroi latérale comprend deux cannelures.

7. Boîte d'écrasement composite selon la revendication 6, dans laquelle les deux cannelures sur la ou chacune parmi la première paroi latérale (1114) et/ou la seconde paroi latérale (1116) comprennent une cannelure supérieure (1166A, 1166B) et une cannelure inférieure (1168A, 1168B) dans laquelle au moins une partie de la cannelure supérieure est positionnée dans une moitié supérieure de la paroi latérale, dans laquelle la moitié supérieure de la paroi latérale est adjacente à la paroi supérieure (1110) et/ ou au moins une partie de la cannelure inférieure est positionnée dans une moitié inférieure de la paroi latérale, dans laquelle la moitié inférieure de la paroi latérale est adjacente à la paroi inférieure (1112).

8. Boîte d'écrasement composite selon la revendication 7, dans laquelle au moins une partie de la cannelure supérieure est contiguë à une cannelure supérieure (1174) sur la paroi d'extrémité, et/ou au moins une partie de la cannelure inférieure est contiguë à une cannelure inférieure (11176) sur la paroi d'extrémité.

9. Boîte d'écrasement composite selon l'une quelconque revendication précédente, dans laquelle au moins l'une parmi la ou les cannelures comprend une partie plane, éventuellement la partie plane étant parallèle à la paroi dans laquelle est formée la cannelure.

10. Boîte d'écrasement composite selon l'une quelconque revendication précédente, dans laquelle la ou les cannelures comprennent des coins arrondis (136A, 136B, 138A, 138B ; 1118A, 1118B) éventuellement, dans laquelle les coins arrondis se trouvent sur un ou plusieurs bords de chacune de la ou des cannelures et éventuellement dans laquelle un rayon des coins arrondis est compris entre 4 mm et 11 mm, éventuellement 5 mm ou 7 mm ou 9 mm.

11. Boîte d'écrasement composite selon l'une quelconque revendication précédente, dans laquelle au moins une parmi la ou les cannelures s'étend sur toute la longueur de la paroi supérieure, de la paroi inférieure, de la première paroi latérale et/ou de la seconde paroi latérale entre la première extrémité et la seconde extrémité.

12. Boîte d'écrasement composite selon l'une quelconque revendication précédente, dans laquelle au moins l'une parmi la paroi supérieure, la paroi inférieure, la première paroi latérale et/ou la seconde paroi latérale présente une épaisseur comprise entre 2 mm et 8 mm, inclus, éventuellement 4 mm, et/ou dans laquelle au moins une partie de la paroi d'extrémité présente une épaisseur comprise entre 3 mm et 10 mm.

13. Véhicule comprenant une boîte d'écrasement composite selon l'une quelconque des revendications 1 à 12.
